# EUROPEAN PATENT APPLICATION

(11) **EP 1 553 274 A2**
(43) Date of publication of application: **13.07.2005**
(21) Application number: 05000128.8
(22) Date of filing: 05.01.2005
(51) Int. Cl.: F02C 3/20, F01K 23/10

(54) **Repowering steam plant through addition of gas turbine and method for remodelling plant facilities**

(30) Priority: 09.01.2004 JP 2004003680
(71) Applicant: Hitachi, Ltd., Tokyo 100-8280 (JP)
(72) Inventor: Yamanaka, Kazunori Hitachi, Ltd., IP Group, Chiyoda-ku Tokyo 100-8220 (JP); Marushima, Shinya Hitachi, Ltd., IP Group, Chiyoda-ku Tokyo 100-8220 (JP); Higuchi, Shinichi Hitachi, Ltd., IP Group, Chiyoda-ku Tokyo 100-8220 (JP); Kizuka, Nobuaki Hitachi, Ltd., IP Group, Chiyoda-ku Tokyo 100-8220 (JP); Nakabaru, Mitsugu Hitachi, Ltd., IP Group, Chiyoda-ku Tokyo 100-8220 (JP); Takahashi, Hirokazu Hitachi, Ltd., IP Group, Chiyoda-ku Tokyo 100-8220 (JP)
(74) Representative: Beetz & Partner Patentanwälte

(57) **Abstract**

A repowering steam plant through the addition of a gas turbine, and a method for remodeling the plant facilities. This repowering steam plant is constructed by, to existing steam turbine facilities (100), additionally installing: gas turbine facilities (200); a high-temperature and high-pressure water line (10) that is provided so as to branch off from a feedwater line (5) in the steam turbine facilities (100) and to pass through a boiler (1); a branch fuel line (11) branched off from a fuel line (4) in the steam turbine facilities (100); a reformer (300) that reforms boiler fuel from the branch fuel line (11) by high-temperature and high-pressure water from the high-temperature and high-pressure water line (10); and a reformed fuel line that supplies the fuel reformed by the reformer (300), as gas turbine fuel, to a combustor (15) in the gas turbine facilities (200).

## Description

### BACKGROUND OF THE INVENTION

### 1. Field of the Invention

The present invention relates to a repowering steam plant through the addition of a gas turbine, constructed by remodeling an existing thermal power plant, and to a method for remodeling the plant facilities.

### 2. Description of the Related Art

In comparison with a new and powerful power generating plant, an aging power generating plant is low in the power generating efficiency and high in the fuel cost, and in addition, its NOx removal system for exhaust gas must be upgraded in order to meet an environmental regulation value, so that its power generation cost becomes high. In such circumstances, a demand for a thermal power plant having higher efficiency is growing, with the deregulation of power supply and the intensification of environmental regulation as a background.

With this being the situation, in recent years, an attempt has been made to repower a thermal power plant that is in a nonoperating status due to aging as described above, to implement a repowering steam plant, by additionally installing gas turbine facilities thereto. In this repowering steam plant, the addition of the gas turbine allows exhaust gas to be reused as combustion air for a boiler, and enables the power generation capacity and energy efficiency to be enhanced. On the other hand, heavy oil is generally used as fuel for a boiler in many cases, but it contains much vanadium and the like, which are responsible for high-temperature corrosion, and hence, it is undesirable for the heavy oil to be employed as fuel for a gas turbine, made of metal. Accordingly, reformers have been proposed that reform heavy oil into one that can also be used as gas turbine fuel, using supercritical water (see, for example, JP, A 2002-129174).

### SUMMARY OF THE INVENTION

Even if gas turbine facilities are additionally installed to an existing thermal power plant such as steam turbine facilities, the boiler fuel containing vanadium and the like, cannot be used as fuel for a gas turbine, and hence, a fuel line for the gas turbine facilities must generally be provided in a separated manner. One possible measure to be taken here is to reform fuel for a boiler into fuel for a gas turbine by utilizing the above-described conventional art, and to thereby share the fuel line between the existing facilities and the gas turbine facilities. In this case, however, facilities for refining supercritical water are required. Furthermore, with the gas turbine facilities installed, an NOx removal system for removing NOx in exhaust gas in the gas turbine facilities is required, with the protection of the environment in view.

Accordingly, it is an object of the present invention to provide a repowering steam plant through the addition of a gas turbine, the repowering steam plant allowing the cut-down of power generation cost by repowering an existing thermal power plant through a minimum remodeling and by using reformed fuel as gas turbine fuel, and a method for remodeling the plant facilities.

To achieve the above-described object, the present invention additionally installs gas turbine facilities and a reformer for reforming fuel for existing facilities, to an existing thermal power plant, and further, refines high-temperature and high-pressure water for fuel reformation, by utilizing the existing facilities.

According to the present invention, it is possible to reduce the power generation cost by repowering the existing thermal power plant through a minimum remodeling, and by using reformed fuel as gas turbine fuel.

### BRIEF DESCRIPTION OF THE DRAWINGS

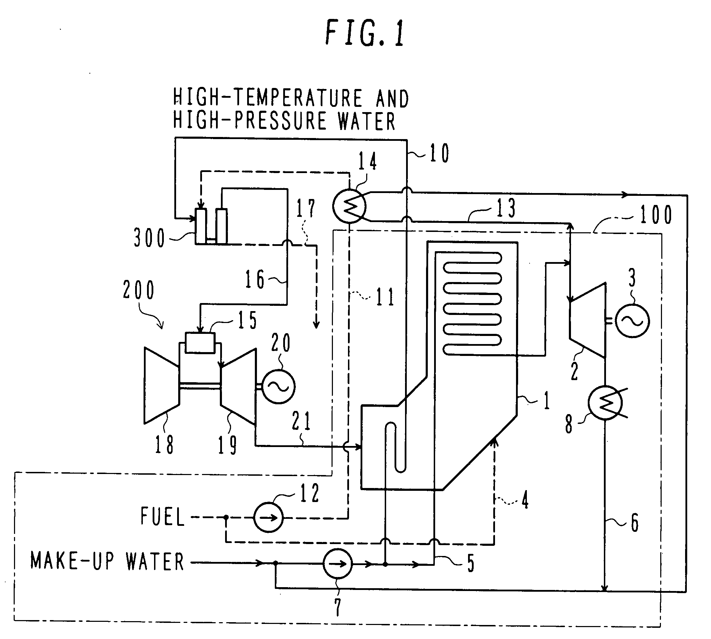

Fig. 1 is a schematic diagram of a repowering steam plant through the addition of a gas turbine, according to an embodiment of the present invention.

### DESCRIPTION OF THE PREFERRED EMBODIMENTS

Hereinafter, a repowering steam plant through the addition of a gas turbine, and a method for remodeling the plant facilities, according to an embodiment of the present invention will be described with reference to the accompanying drawings.

Fig. 1 shows an the repowering steam plant according to this embodiment.

In Fig. 1, a portion surrounded by a chain line shows existing steam turbine facilities that are, for example, in a nonoperating status due to aging. Broadly speaking, the steam turbine facilities 100 are adapted to rotationally drive a steam turbine 2 by steam generated by a boiler 1, and generate electric power by rotating a generator 3 using a rotational power of the steam turbine 2.

Here, description of the steam turbine facilities 100 will be provided. First, a fuel line 4 for supplying fuel from fuel feeding facilities (not shown) is connected to the boiler 1, while a feedwater line 5 for supplying make-up water from a water source (not shown) is connected to the steam turbine 2 through the boiler 1. Fuel to be supplied to the fuel line 4 is freed in advance from sodium, potassium, and the like, which are responsible for high-temperature corrosion, by a salt removal system (not shown).

Connected to the feedwater line 5, is a condensate line 6 that, after recovering steam having worked in the steam turbine 2, circulates the steam in the feedwater line 5. The boiler 1 combusts fuel supplied from the fuel line 4, and supplies water discharged by a feedwater pump 7 provided midway through the feedwater line 5, to the steam turbine 2, as high-temperature and high-pressure steam. This causes the power generator 3 rotating in conjunction with the steam turbine 2 to generate electric power. The steam having rotationally driven the steam turbine 2 is condensed by a condenser 8 provided midway through the condensate line 6, and returned to the feedwater line 5.

The repowering steam plant according to this embodiment is constructed by remodeling such existing steam turbine facilities 100 as follows: First, gas turbine facilities 200 and a reformer 300 for fuel are newly installed to the existing steam turbine facilities 100. Then, to these facilities, a high-temperature and high-pressure water line 10 branched off from the existing feedwater line 5 is added. Next, a branch fuel line 11 branched off from the existing fuel line 4 is added thereto, and further, a branch steam line 13 branched off from the inlet of the existing steam turbine 2 is added thereto. When constructing this repowering steam plant, each portion thereof is configured as described below.

Connected to the reformer 300, are the high-temperature and high-pressure water line 10 branched off from an upstream portion of the boiler 1 in the feedwater line 5, and the branch fuel line 11 branched off from the fuel line 4. Out of these, the high-temperature and high-pressure water line 10 is provided so as to pass through the boiler 1. This high-temperature and high-pressure water line 10 may be branched off from the condensate line 6 instead of the feedwater line 5. Also, the branch fuel line 11 has a pump 12. Furthermore, the present repowering steam plant includes a branch steam line 13 branched off from the steam line (downstream portion of the boiler 1 in the feedwater line 5), which supplies steam to the steam turbine 2; and a heat exchanger 14 for exchanging heat between the branch steam line 13 and the branch fuel line 11.

The reformer 300 and a combustor 15 in the gas turbine facilities 200 are connected by a reformed fuel line 16. As described above, boiler fuel from the branch fuel line 11 is reformed by decomposing and removing vanadium and the like contained therein, using high-temperature and high-pressure water from the high-temperature and high-pressure water line 10, and thereafter supplied to the combustor 15 by the reformed fuel line 16. The vanadium having been decomposed and removed from the boiler fuel by the reformer 300 is discharged from the reformer 300 together with water through a drain line 17.

Within the gas turbine facilities 200, in the combustor 15, combustion gas is refined by combusting reformed fuel from the reformed fuel line 16 together with compressed air for combustion from a gas turbine compressor 18, and this combustion gas rotationally drives the gas turbine 19. A power generator 20 is connected to the gas turbine 19, and generates electric power by rotating together with the gas turbine 19. The gas turbine 19 may be of either a uniaxial type or biaxial type.

The gas turbine 19 and the boiler 1 are connected by a combustion gas line 21, and combustion gas (exhaust gas) from the gas turbine facilities 200 is introduced into the boiler 1, as combustion air.

By remodeling the existing steam turbine facilities 100 as described above, a repowering steam plant after the remodeling operates as follows:

First, one portion of fuel supplied to the boiler 1 is subjected to a pressure up to a predetermined pressure. Thereafter, in the course of passing through the branch fuel line 11, the portion of the fuel is subjected to a heat exchange with steam passing through the branch steam line 13 by the heat exchanger 14, and supplied to the reformer 300 after undergoing a temperature up.

On the other hand, steam exiting the steam turbine 2 is introduced into the condenser 8, and after being condensed there, it is returned to the feedwater line 5 through the condensate line 6. Then, together with make-up water from the water source (not shown), the condensate is subjected to a pressure up to a set pressure by the feedwater pump 7 for the boiler, and after undergoing a temperature up to a set temperature by passing through the boiler 1, it is supplied to the reformer 300, as high-temperature and high-pressure water.

Here, it is preferable that the "set pressure" be in a pressure range on the order of, e.g., 10 MPa to 25 MPa, and that the "set temperature" be in a temperature range on the order of, e.g., 400°C to 470°C, which ranges allow states including a subcritical state and a supercritical state to be provided. The foregoing high-temperature and high-pressure water, therefore, is assumed to include subcritical water, supercritical water, and water in temperature and pressure states close to those of the subcritical or supercritical water.

Here, "supercritical fluids" refer to fluids that are in a state beyond the critical temperature and pressure (critical points) in which gas and liquid can coexist, and that have characteristics exhibiting both of the liquid-like behavior to dissolve solutes and gaseous behavior superior in the diffusing capability. Among them, particularly, the supercritical water is water that has been subjected to a temperature up and a pressure up above its critical points (generally, 22 MPa and 374°C). The supercritical water exerts a large effect as a reaction solvent and has an advantage of being capable of continuously controlling various properties of a fluid by the variation in pressure and temperature, thus providing applicability to various reaction systems. The supercritical water is capable of dissolving any organic substance, and generally, can dissolve even dioxin, polychlorinated biphenyl (PCB), and the like up to nearly 100% of them.

The boiler fuel supplied to the reformer 300 is reformed by vanadium and the like being decomposed and removed by an action of the high-temperature and high-pressure water, serving as a reaction solvent. The reformed fuel is supplied to the combustor 15 in the gas turbine facilities 200 through the reformed fuel line 16, and the vanadium and the like that have been decomposed and removed are discharged out of the line through the drain line 17.

The fuel supplied to the combustor 15 is mixed with combustion air that has been subjected to a pressure up by the gas turbine compressor 18, and combusts. The resultant combustion gas at a high-temperature and a high-pressure drives the gas turbine 19. The power generator 20 is driven by a rotational power of the gas turbine 19, thereby generating electric power.

The combustion gas (exhaust gas) having worked in the gas turbine 20 is usually high-temperature air of which the temperature in the vicinity of the outlet of the gas turbine 20 is on the order of 600°C. This combustion gas, therefore, is supplied to the boiler 1 through the combustion gas line 21, and employed as combustion air for the boiler 1, whereby thermal energy of the exhaust gas is effectively utilized. In this case, if oxygen concentration in the exhaust gas is insufficient, outside air may be taken in as necessary. Although the temperature of the exhaust gas in the gas turbine facilities 200 is high, it is not high enough to produce steam at high-temperature and high-pressure necessary to drive the steam turbine 2. This being the situation, the exhaust gas supplied to the boiler 1 is used as combustion air, as described above, and high-temperature and high-pressure steam obtained by supplying fuel to the boiler 1 and re-combusting it, is supplied to the steam turbine 2, whereby the rotational power of the steam drives the power generator 3 to generate electric power.

Among conventional aging thermal power plants like the steam turbine facilities 100 shown in Fig. 1, there are many plants that are in a nonoperating status due to low power generating efficiency and high power generating cost. In some of these plants, the above-described repowering by the remodeling into a repowering steam plant is performed for the purpose of enhancing power generating efficiency and output. In this case, although fuel containing much heavy metals such as vanadium and the like can be used as fuel for the boiler, it cannot be used as fuel for the gas turbine, which is a high-speed rotating body, if the fuel is left uncontrolled. This is because the vanadium in the fuel is high in the concentration and responsible for failure of equipment due to high-temperature corrosion. Therefore, when remodeling the conventional thermal power plant into a repowering steam plant by newly adding gas turbine facilities, facilities for reforming the fuel line for the steam turbine facilities, or the fuel for the boiler into fuel for the gas turbine facilities is required.

For supplying condensate from the steam turbine to the boiler facilities generating high-temperature and high-pressure steam, the steam turbine plant typically has facilities for pressuring up condensate. Therefore, when constructing a repowering steam plant by remodeling the steam turbine facilities, the aforementioned facilities for pressuring up condensate can also be utilized as facilities for refining high-temperature and high-pressure water, which is a reaction solvent necessary to reform the boiler fuel into the gas turbine fuel.

With such being the situation, in the present embodiment, as described above, there is provided a high-temperature and high-pressure water line 10 for supplying high-temperature and high-pressure water for fuel reformation, making use of the existing boiler feedwater pump 7 and boiler 1, and the boiler fuel is partly reformed using high-temperature and high-pressure water from the high-temperature and high-pressure water line 10, whereby the resultant fuel is supplied as fuel for the newly installed gas turbine facilities 200. In this way, making the reformed fuel refinable by making the most of the existing facilities, allows the fuel facilities to be shared between the existing facilities and the added facilities. Also, the required amount of high-temperature and high-pressure water used for the reformation of fuel into the gas turbine fuel is very slight as compared with the amount of feedwater to the steam turbine, so that the remodeling range of facilities can be reduced to a minimum when remodeling the existing conventional thermal power plant.

The use of the high-temperature and high-pressure water allows the amount of vanadium contained in the boiler fuel to be reduced to the allowable value or less by means of the reformer 300, thereby enabling the fuel to be used as gas turbine fuel. It is therefore possible to employ heavy oil C, generally used as boiler fuel and inexpensive compared with heavy oil A, generally used as gas turbine oil. This enables a significant cut-down of the fuel cost, leading to a significant reduction in the power generating cost.

Furthermore, in the present embodiment, the provision of the branch steam line 13 and the heat exchanger 14 allows the heat of steam supplied to the steam turbine 2 to be used to enhance the temperature of fuel to be reformed, thus enabling the thermal energy in the system to be effectively utilized.

In addition, for example, when oil is used as fuel, the gas turbine facilities 200 require an NOx removal system for removing NOx in exhaust gas therein for the purpose of meeting the environmental regulation value. In this respect, in this embodiment, the exhaust gas from the gas turbine facilities 200 is introduced into the existing boiler 1 through the combustion gas line 21 to re-combust it, thereby allowing the NOx removal system of the boiler 1 to be shared between the boiler 1 and the gas turbine facilities 200 without the need to newly install an NOx removal system for the gas turbine facilities 200. This can also contribute toward reducing the remodeling range of the existing plant to a minimum.

## Claims

1. A repowering steam plant through the addition of a gas turbine, the repowering steam plant comprising:
existing steam turbine facilities (100) that rotationally drive a steam turbine (2) using steam generated by a boiler (1);
gas turbine facilities (200) additionally installed to the existing steam turbine facilities (100);
a high-temperature and high-pressure water line (10) that is provided so as to branch off from a feedwater line (5) or a condensate line (6) in the steam turbine facilities and to pass through the boiler (1);
a branch fuel line (11) branched off from a fuel line (4) in the steam turbine facilities (100);
a reformer (300) that reforms boiler fuel from the branch fuel line (11) by high-temperature and high-pressure water from the high-temperature and high-pressure water line (10); and
a reformed fuel line (16) that supplies the fuel reformed by the reformer (300), as gas turbine fuel, to a combustor (15) in the gas turbine facilities (200).

2. Repowering steam plant according to Claim 1, **characterized by** further comprising a combustion gas line (21) that introduces combustion gas from the gas turbine facilities (200), as air for combustion, into the boiler (1).

3. Repowering steam plant according to Claim 1 or 2, **characterized by** further comprising a branch steam line (13) branched off from the steam line for supplying steam to the steam turbine (2), and a heat exchanger exchanging heat between the branch steam line (13) and the branch fuel line (11) .

4. Repowering steam plant according to any one of Claims 1 to 3, **characterized in that** the pressure of the high-temperature and high-pressure water is on the order of 10 MPa to 25 MPa, and the temperature thereof is on the order of 400°C to 470°C.

5. A method for remodeling plant facilities, the method comprising the steps of:
providing a reformer (300) for reforming fuel for a boiler (1) to existing steam turbine facilities (100), when constructing a repowering steam plant by additionally installing gas turbine facilities (200) to the existing steam turbine facilities (100) that rotationally drives the steam turbine (2) using steam generated by the boiler (1);
connecting, to the reformer (300), a high-temperature and high-pressure water line (10) that is provided so as to branch off from a feedwater line (5) or a condensate line in the steam turbine facilities and to pass through the boiler (1), and a branch fuel line (11) branched off from a fuel line (4) in the steam turbine facilities (100); and
connecting the reformer (300) and a combustor (15) in the gas turbine facilities (200) by a reformed fuel line (16), and causing the boiler fuel from the branch fuel line (11) to be reformed by high-temperature and high-pressure water from the high-temperature and high-pressure water line (10), and to be supplied to the combustor (15) in the gas turbine facilities (200) through the reformed fuel line (16).
